# EUROPÄISCHE PATENTSCHRIFT

(11) **EP 3 223 618 B1**
(45) Veröffentlichungstag und Bekanntmachung des Hinweises auf die Patenterteilung: **24.10.2018**
(21) Anmeldenummer: 15807829.5
(22) Anmeldetag: 30.11.2015
(51) Int. Cl.: A21D 8/04, A21D 17/00

(54) **VERFAHREN ZUR VERARBEITUNG VON RÜCKTEIG ALS FERMENTATIONSPRODUKT FÜR DIE HERSTELLUNG VON BACKPRODUKTEN**
METHOD FOR PROCESSING SCRAP DOUGH TO FORM A FERMENTATION PRODUCT USED FOR PRODUCING BAKERY PRODUCTS
PROCÉDÉ DE TRAITEMENT DE PÂTE DE RETOUR EN TANT QUE PRODUIT DE FERMENTATION POUR LA FABRICATION DE PRODUITS DE BOULANGERIE

(30) Priorität: 28.11.2014 EP 14195435
(43) Veröffentlichungstag der Anmeldung: 04.10.2017
(73) Patentinhaber: DIOSNA Dierks & Söhne GmbH, 49086 Osnabrück (DE)
(72) Erfinder: ZENSE, Torsten, 31311 Uetze (DE); OLMS, Frederik, 30938 Burgwedel (DE)
(74) Vertreter: dompatent von Kreisler Selting Werner - Partnerschaft von Patent- und Rechtsanwälten mbB
(86) Internationale Anmeldenummer: PCT/EP2015/078083
(87) Internationale Veröffentlichungsnummer: WO 2016/083619

(56) Entgegenhaltungen:
- EP-A1- 0 377 161
- AU-B2- 733 776
- DE-A1- 3 323 081
- US-A- 3 947 597

## Beschreibung

Die Erfindung betrifft ein Verfahren zur Herstellung eines Basisteigs für Backprodukte unter Einsatz von fermentierten Rückteig, einen Basisteig erhältlich nach dem erfindungsgemäßen Verfahren und dessen Verwendung zur Herstellung von Backprodukten.

Rückteig fällt in Backbetrieben an verschiedenen Stellen der Herstellung und Aufarbeitung von Teigen an. Der Rückteiganfall beträgt im Allgemeinen zwischen 1,5 und 17 Prozent. Im Sonderfall der Herstellung eines Teigbandes, z.B. zur Herstellung von Pizzaböden, kann der Rückteiganfall bis hin zu 45 Prozent bei ausgestochenen runden Formen betragen. Seine Verwertung ist aber sowohl technologisch als auch biochemisch begrenzt.

Bereits heute sind verschiedene Verfahren zur Nutzung oder auch Aufarbeitung von Rückteig bekannt.

Rückteig ist aufgrund seiner Grundbestandteile Mehl und Wasser sowie Salz, zumeist Hefe, und vielfach auch einem Backmittel, ein biochemisch und mikrobiologisch aktives System. Dieses System verändert sich stetig, wobei der Grad der Veränderung von den Faktoren Zeit, Temperatur, Rezepturbestandteilen, enzymatischem und mikrobiologischem Status der Zutaten sowie der Wasserverfügbarkeit abhängt.

Für die Veränderung sind primär Abbauprozesse sowie biochemische Stoffumwandlungen verantwortlich. Der Teig verändert sich stetig, aufgrund enzymatischer Prozesse sogar innerhalb weniger Minuten.

Technisch machen sich diese Prozesse in einer veränderten Konsistenz, das heißt veränderten viskosen und elastischen Eigenschaften, einer veränderten Wasserbindung, veränderten Mischverhaltens und einer modifizierten Belastbarkeit gegenüber Scherung und Druck und der Stabilität bei Teigruhe, Gär- und Backprozess bemerkbar. Die modifizierte innere Struktur hat schließlich sogar Einfluss auf Art und Umfang der Veränderungen der Produkte in der Lagerphase.

Die seit jeher vom Bäcker praktizierte Vorgehensweise, im Prozess anfallenden Rückteig direkt in eine frisch zuzubereitende Teigcharge zurückzuführen, erlaubt eine Verwertung des Rückteigs als Bestandteil des Hauptteiges. Seine Wirkung ist aber nur dann wiederholbar und damit vorhersehbar, wenn der Prozessablauf gleichmäßig ist. Die Verarbeitung muss unmittelbar erfolgen. Jede Abweichung in Verarbeitungsmenge, Lagerzeit, Einarbeitungszeit und -temperatur verändert die Qualität der mit Rückteig hergestellten Produkte.

Bekannt sind auch Möglichkeiten der Rückführung von Teig durch Aufschlämmung (typisch sind mindestens 1,5 Teile Wasser auf 1 Teil Teig). Die Zugabe von Wasser verstärkt die Abbauprozesse. Gleichzeitig werden mikrobiologische Prozesse aktiv, die sogar zum Verderb des Rückteiges führen können. Hier ist eine Verwertung ebenfalls nur zeitnah möglich, wenn man hygienisch sicher arbeiten möchte. Es ist mit entsprechend höheren Energiekosten möglich, Abbau- und Verderbprozesse durch starkes Kühlen (kleiner gleich 4 °C) einzuschränken. Gleichwohl ist bekannt, dass es auch hier immer wieder zu mikrobiologischem Verderb kommen kann, da keine weitere Möglichkeiten der Konservierung genutzt werden.

In vielen Produktionsprozessen treten Situationen auf, die die Verarbeitungszeit des Rückteigs sowie die anfallende Menge verändern. So können kurzzeitige Produktionspausen, zum Beispiel Produktwechselzeiten, Rüstzeiten etc. vor der Gewinnung des Rückteigs, den Rückteig verändern oder die Verwertung des Rückteigs verzögern. In dieser Zeit laufen im Rückteig die erwähnten biochemischen und mikrobiologischen Aktivitäten, oder die Veränderungsprozesse weiter ab. In der Qualitätskontrolle führt das Aussortieren "optisch mangelhafter" Teiglinge zu einem verstärkten Anfall von Rückteig. Um den Ausschuss zu vermindern, werden die Rückteiglinge nach dem Stand der Technik oft zusätzlich in den Hauptteig gegeben. Dies bewirkt, dass die Menge an rückgeführtem Teig spontan und kurzfristig angehoben wird und somit der Rückteiganteil deutlich variiert.

Jede Abweichung in Menge und Zeit führt aber aufgrund der ablaufenden biologischen Prozesse im Rückteig zu veränderten Qualitäten der aus ihm hergestellten Teigchargen. Es ist bekannt, dass dies das Verhalten des mit Rückteig bereiteten Hauptteiges deutlich beeinflusst, und zwar sowohl in der nachfolgenden Aufarbeitung, als auch in den Teigruhe- und Gärphasen. Dies kann zu unterschiedlicher Gebäckqualitäten führen.

Im handwerklichen Bereich werden diese Qualitätsschwankungen oft in Kauf genommen. In Linienproduktionen jedoch, insbesondere, wenn externe Abnehmer mit dem Backbetrieb eine Spezifikation der Backwaren vertraglich vereinbart haben, sind die Toleranzen sehr eng spezifiziert und lassen nur geringe Gebäckveränderungen zu.

Problematisch wird es, wenn ein Teig, der schon Rückteig (Stufe 1) enthält, erneut als Rückteig (der Stufe 2) verwendet wird. Rückteig Stufe 2 enthält neben dem frischen Gemisch der Zutaten bereits gealterten, das heißt abgebauten Teig aus Stufe 1. Bei einer Teigrückführung von 10 Teilen Rückteig 1 enthalten 10 Kilogramm Rückteig der Stufe 2 ein Kilogramm Rückteig Stufe 1. Wenn nun die beschriebenen Abweichungen im Prozessablauf auftreten, verschärft sich die Wirkung des Abbaus der Teigstruktur.

Die beschriebene Problemstellung verstärkt sich im Bereich der Linienproduktion. Da es im Sinne gleichmäßiger Produktqualität vorteilhaft ist, Rückteig in einer definierten Menge möglichst als ständigen Rezepturbestandteil vorzusehen, ergibt sich das Problem, dass zu Beginn der nächsten Produktion noch kein (frischer) Rückteig vorhanden ist. Desgleichen wird am Ende der vorangegangenen Produktion der anfallende Rückteig nicht mehr verwertet werden können. Daraus entsteht die Notwendigkeit, überschüssigen Rückteig am Ende einer Produktionspause lagerfähig zu machen. Dieser kann dann zu Beginn der nächsten Produktion, bei der frischer Rückteig noch nicht in ausreichender Menge angefallen ist, trotzdem schon im Hauptteig eingesetzt werden.

EP 0 377 161 A1 offenbart ein Verfahren zum Aufarbeiten von Restteig zu Neuteig, wobei der Restteig zu einem Teigband geformt, das Teigband zerkleinert und zermahlen sowie mit Mehl und gegebenenfalls weiteren trockenen Zutaten in einem dem Neuteig entsprechenden Verhältnis vermischt, getrocknet und in Form eines rieselfähigen, feinkörnigen, lagerfähigen Substrat ausgetragen wird. US 3,947,517 A offenbart ebenfalls die Wiederverwendung von Restteig durch Rückführung und Vermischung des Restteigs mit Rohteig.

DE 33 23 081 A1 offenbart ein Verfahren zur Herstellung eines Sauerteiges für die Bereitung von Brot- und Backwaren, unter Verwendung von zerkleinertem Restbrot aus Hartbrot bzw. Knäckebrot, vermischt mit Getreideschrot- und/oder Mehlanteilen, Wasser und Restbrot fermentierenden Bakterien und wobei die Mischung anschließend einem die Restbrotanteile fermentierenden Prozess unterworfen wird.

AU 733 776 offenbart ein Verfahren zur Verwertung von Backwaren, insbesondere von Rest- und Rückbrot, und/oder in ihrer stofflichen Zusammensetzung ähnlichen Produkten als Ausgangsmaterial für die Backwarenherstellung, insbesondere von Broten aus Weizen- und Roggenmahlerzeugnissen. Über mehrere Verfahrensschritte werden Hefe, Flüssigsauer, Ethanol, Ballaststoffe und Kohlendioxid als Produkte gewonnen und innerbetrieblich im Rahmen der Brotherstellung eingesetzt. Durch enzymatische und fermentative Aufarbeitung wird das Rest- und Rückbrot in Form der aus ihm gewonnenen Produkte wieder in den Brotherstellungsprozess eingeführt.

Der vorliegenden Erfindung liegt die Aufgabe zugrunde, ein Verfahren zur Aufarbeitung von lagerfähigem Restteig bereitzustellen, welches eine flexible Wiederverwendung des Restteiges bei gleichbleibenden und stabilen chemischen sowie sensorischen Eigenschaften ermöglicht.

Die erfindungsgemäße Aufgabe wird durch ein Verfahren gemäß Patentanspruch 1 gelöst.

Der Fachmann konnte nicht davon ausgehen, dass, aufgrund möglicherweise vermutbarer Ähnlichkeiten von Restteig und Restbrot, sich eventuell vorhandene Kenntnisse über das Recyceln von Restbrot, ohne weiteres auf die Wiederverwertung von Restteig übertragen lassen. Schon allein, weil Restbrot ausgebacken ist und eine Vielzahl von chemischen Reaktionen ausgesetzt ist, die durch den Backprozess vom Teig zum Brot stattfinden. Restbrot und Restteig sind für den Fachmann sehr verschiedene Substrate.

Was die Zusammensetzung von Restbrot und Restteig betrifft, gibt es aber Unterschiede, die die einfache Übertragung von Verfahren, die für den Brotbereich gelten, auf Teig nicht ermöglichen. Zunächst gilt: Ein Rückteig ist ein noch aktives, lebendes Medium. Ein weiterer Grund ist, dass die vermeintlich gleichen Grundstoffe von Teig und Brot in beiden Formen in jeweils anderen Zuständen enthalten sind.

Die folgende kleine Tabelle verdeutlicht diese Unterschiede, wobei auf die wichtigsten Bestandteile, die für eine Fermentation relevant sind, abgestellt wurde:

| Rohstoff | Bestandteil | Zustand im Teig | Zustand im Brot |
|---|---|---|---|
| Mehl | Eiweiß | Nativ, mit Wasser verquollen, hochviskose Agglomerate bildend | Denaturiert, Wasser wurde dabei abgegeben, Netzwerk/Gerüst mit Einlagerung von Stärke und Lipiden |
| | Eiweiß | Einem enzymatischen Abbau unterliegend (Proteasen) | Die abgebauten Bestandteile liegen als Bruchstücke bis hin zu ihrer Grundstruktur vor, als Aminosäuren |
| Mehl | Stärke | Unverquollene, ganze Stärkekörner, mit einem Wasserfilm umgeben | Unter Wasseraufnahme verkleisterte (gelatinisierte) Molekülstrukturen; gerüstbildend |
| | Stärke | Einem enzymatischen Abbau unterliegend (Amylasen) | Die abgebauten Bestandteile liegen als Oligosaccharide bis hin zu ihrer Grundstruktur vor: z.B. Maltose, Glucose |
| Mehl | Ballaststoffe, (Nahrungs-) Fasern | Verquollen, zum Teil schleimbildend, zum Teil die Teigkonsistenz beeinflussend, zum Teil gelöst | Noch teilweise verquollen, aber fest, die Brotstruktur beeinflussend, in das Brotgerüst eingebunden. |
| | Ballaststoffe, (Nahrungs-) Fasern | Einem enzymatischen Abbau unterliegend (diverse Enzyme) | |
| Wasser | | Weitgehend frei, im "simplen" Mehl-/Wassergemisch Nahrungsgrundlage für mögliche Verderbnisorganismen. | Weitgehend gebunden (Stärke, Fasern) |
| Hefe | | Lebendig, teilt sich, setzt Stoffwechselprodukte frei | Denaturiert |
| Fett | | Teilweise fest, teilweise fließend, Teigstruktur stark beeinflussend (geschmeidig, klebend) | Sensorisch wirksam im Brot ("wollige Krume"), teilweise abgebaut bzw. umgewandelt. |
| | | Ist zum Teil Umwandlungs- und Abbauprozessen unterworfen. Saure Hydrolyse möglich. | |

Allein dieser Vergleich zeigt, dass die Verwertung von Teig oder von Brot ganz anderen Mechanismen unterliegen muss. Will man ein möglichst hochwertiges Brot mit Bestandteilen einer Wiederverwertung backen, so müsste, wie z.B. in DE 33 23 081 A1 und AU 733 776 beschrieben, bereits fertig gebackenes Brot zunächst in langwierigen Prozessen umgewandelt werden, wieder in lebende bzw. aktive Produkte.Im Stand der Technik gemäß DE 33 23 081 A1 und AU 733 776 wird zwar eine Wiederverwertung offenbart, die aber nur über den Weg, aus Teig Brot zu backen und dieses Brot entweder durch Fermentation oder nach Umwandlungsprozessen wieder in einen Teig einzuarbeiten, was zeit- und energieaufwändig ist. Im Grunde stellt dies nichts anderes als bereits beschriebene Zerkleinerung unter Zugabe von Wasser dar.

Aufgrund der Unterschiede in der Zusammensetzung von Restbrot und ist eine einfache Übertragung von Verfahren, die für den Brotbereich gelten, auf Teig nicht möglich. Ein Rückteig ist ein noch aktives, lebendes Medium. Ein weiterer Grund liegt darin, dass auch vermeintlich gleiche Grundstoffe von Teig und Brot jeweils in anderen Zuständen darin enthalten sind.

Allein dieser Vergleich zeigt, dass die Verwertung von Teig oder von Brot ganz anderen Mechanismen unterliegen muss. Will man ein möglichst hochwertiges Brot mit Bestandteilen einer Wiederverwertung backen, so müsste, wie z.B. in DE 33 23 081 A1 und AU 733 776 beschrieben, bereits fertig gebackenes Brot zunächst in langwierigen Prozessen umgewandelt werden, wieder in lebende bzw. aktive Produkte.

Das Verfahren gemäß US 3,947,517 A folgt dem Prinzip, den lebenden Teig durch die kontinuerliche Einarbeitung in Rohteig zu stabilisieren. Solch ein Verfahren ist zeitnah positiv einsetzbar und wurde auf S. 2, Zeilen 4-10 angesprochen. Auf S.2, Zeile 13 bis S.3, Zeile 13 wurden aber auch die möglichen Nachteile aufgezeigt, denen mit der vorliegenden Erfindung begegnet wird.

Das erfindungsgemäße Verfahren zur Verwertung von Restteig vermeidet die Umwandlung in eine eigens angemischte feste Phase (EP 0 377 161 A1) oder gar das Backen. Erfindunggemäß werden die Lebensprozesse zunächst genutzt, dann eingedämmt und schließlich gestoppt, und es wird dabei ein Wiederverwertungsprodukt erzeugt, welches nicht nur einem Teig für die Bildung einer guten Brotstruktur weiterhin sehr nahe kommt, sondern zusätzlichen Nutzen durch technologische, geschmackliche und lagerungstechnische Vorteile bietet.

Das erfindungsgemäße Verfahren ermöglicht in vorteilhafter Weise auch die Verwertung von Feinteigen mit bis zu 24 Gewichts-% Fett-, insbesondere Buttergehalt.

Vorteilhafte Ausgestaltungen des erfindungsgemäßen Verfahrens ergeben sich aus den abhängigen Patentansprüchen.

Die Erfindung umfasst des Weiteren einem nach dem erfindungsgemäßen Verfahren erhältlichen Basisteig und dessen Verwendung.

Das erfindungsgemäße Verfahren zur Herstellung eines Basisteigs für Backprodukte unter Einsatz von fermentierten Rückteig, umfasst die folgenden Schritte:
a) Versetzen eines Sauerteigsubstrates mit einer Starterkultur und erhalten eines Anstellguts,
b) Grobe Vorzerkleinerung und/oder Vereinzelung eines Rückteiges,
c) Vermischung von 20 bis 70 Teilen Rückteigs aus Schritt b), insbesondere 20 bis 60 Teile Rückteigs aus Schritt b), mit 5 bis 40 Teilen Wasser und 15 bis 50 Teilen des Anstellgutes aus Schritt a), insbesondere 25 bis 50 Teile des Anstellgutes aus Schritt a), und erhalten einer Mischung,
d) Fermentierung, gegebenenfalls Homogenisierung, der Mischung bei einer Temperatur von 20 bis 38 °C über die Zeitspanne von 6 - 20 h (Stunden) und Erhalten eines fermentierten Rückteigs mit einem pH-Wert von kleiner pH 4,5;
e) Vermischung von 15 bis 35 Teilen des fermentierten Rückteigs mit 65 bis 85 Teilen eines Rohteiges und erhalten eines Basisteiges.

In einem ersten Verfahrensschritt wird ein Sauerteigsubstrat mit einer Starterkultur versetzt und ein Anstellgut erhalten. Im folgenden Schritt wird ein Rückteig, beispielsweise aus einem parallelen Produktionsverfahren grob vorzerkleinert und/oder vereinzelt. Der Ausdruck "grob vorzerkleinert" umfasst insbesondere Teigstücke mit einer Oberfläche bis zu ca. 660 cm², beispielsweise 20 cm x 15 cm bei ausgerolltem Teig, max. 0,8 cm dick. Der Ausdruck "vereinzelt" bedeutet insbesondere im Sinne der Erfindung, dass aus einem Behälter ausgehobene Teigstücke ein Volumen bis etwa 2,8 dm³ einnehmen können. Der Ausdruck "Teile" umfasst Gewichtsanteile im Bezug auf die einzelnen Komponenten und Bestandteile. Anschließend wird aus 20 bis 70 Teilen Rückteigs aus Schritt b) mit 5 bis 40 Teilen Wasser und 15 bis 50 Teilen des Anstellgutes aus Schritt a) eine Mischung erhalten. Diese wird einer Fermentierung, gegebenenfalls Homogenisierung, der Mischung bei einer Temperatur von 20 bis 38 °C über die Zeitspanne von 6 - 20 h (Stunden) unterzogen und ein fermentierter Rückteig mit einem pH-Wert von kleiner pH 4,5 wird erhalten. Die Fermentation des Rückteigs, aus welchem ein Sauerteig entsteht, führt zu einer Absenkung des pH-Wertes und damit der Verlangsamung oder sogar dem Unterbrechen von Veränderungs- und Verderbnisprozessen. Unterbrochen wird zum Beispiel die Aktivität der Hefe, stark verlangsamt die Aktivität der meisten Enzyme. Die Fermentation des erfindungsgemäßen Verfahrens, insbesondere in Verbindung mit einem Kühlschritt, erlaubt eine längere Lagerung des Rückteigs, sowie eine erhöhte Flexibilität im Hinblick auf den Zeitpunkt der Rückführung.

Die Vorteile des erfindungsgemäßen Verfahrens bestehen gegenüber der Zugabe trockener Zutaten vermutlich in der Verquellung der Teigbestandteile, was sich günstig für das Erreichen einer guten Gebäckqualität auswirkt, so zum Beispiel saftiger Krume und langer Frischhaltung. Die Fermentation wird durch den gezielten Einsatz von Starterkulturen in Verbindung mit der kulturspezifischen Festlegung von Fermentationsparametern (Temperatur, Zeit, etc.) definiert und wiederholbar ausgeführt.

Darüber hinaus erlaubt das erfindungsgemäße Verfahren, dass das Verhältnis von Anstellgut zur Menge an Rückteig die Geschwindigkeit der Fermentation und die Kennzahlen des erhaltenen Sauerteiges dergestalt beeinflusst, dass der Anwender nicht nur Rückteig sicher verarbeiten, sondern weitreichende eigene Gestaltungsmöglichkeiten für seinen Prozess hat.

In einem abschließenden Schritt werden 15 bis 35 Teile des fermentierten Rückteigs mit 65 bis 85 Teilen eines Rohteiges vermischt und ein Basisteig für weitere, nachgelagerte Backprozesse beispielsweise in der Brot oder Brötchen Herstellung, erhalten.

Als Vorteil gegenüber der direkten Rückführung von Rückteigtritt in Erscheinung, dass enzymreiche Backmittel im Hauptteig eingesetzt werden können. Deren Enzyme werden im Allgemeinen seitens ihres pH-Optimums im Bereich eines klassischen Teigmilieus eingestellt, im Allgemeinen größer pH 5,4. Im Falle direkter Rückteigverwertung tritt eine Kumulierung des enzymatischen Effekts auf, was die Zugabe möglicher Anteile rückgeführten Teiges sehr stark begrenzt. Durch die natürliche Absenkung des pH-Wertes nach dem erfindungsgemäßen Verfahren und der resultierenden Verlangsamung der Prozesse im Teig können dagegen größere Anteile enzymreichen Teiges in den Hauptteig retourniert werden.

Gegenüber der Restteigaufschlämmung hat die erfindungsgemäße Fermentation den Vorteil, dass bei ausreichend niedrigen pH-Werten Abbau- und Verderbnisprozesse unterdrückt werden. Ein zeitverzögerter Einsatz des Rückteigs, zum Beispiel bei Wiederanfahren eines Prozesses, ist bei pH-Werten kleiner pH 4,3 bis zu 24 Stunden ohne Kühlung (insbesondere bei Raumtemperatur gleich/unter 25°C) möglich. Die Haltbarkeit beträgt bis zu 48 Stunden bei zusätzlicher Kühlung auf kleiner gleich 14 °C und bis zu 72 Stunden bei Kühlung auf kleiner gleich 8 °C.

Insbesondere umfasst das Sauerteigsubstrat einen tourierten Feinteig, bevorzugt einen tourierten Weizenfeinteig oder Dinkelfeinteig.

Das Sauerteigsubstrat umfasst insbesondere Feinteig, insbesondere Plunderteige, deren Fettgehalt bis zu 24 Gew. % Fettanteil betragen kann, um im Sinne der vorliegenden Erfindung fermentiert werden zu können, respektive 55 Teile Fett bezogen auf 100 Teile Getreidebestandteile. Bekanntermaßen bilden Fett und Wasser physikalisch getrennte Phasen. Hier besteht grundsätzlich die Gefahr, dass nach dem Zerkleinern der Feinteige größere Fettinseln oder sogar Agglomerationen entstehen. Stattdessen wird durch das erfindungsgemäße Verfahren auch die physikalische Stabilität des Sauerteigsubstrats insofern gewährleistet, dass fein zerteilte Fetttropfen nicht agglomerieren und sich nicht als eigenständige, da spezifisch leichtere, Phase an der Oberfläche absetzen. Letzteres gilt für eine Zeitdauer mindestens innerhalb der vormals erwähnten Verarbeitungszeiten, bei Kühllagerung unter 8 °C aber auch darüber hinaus. Die solchermaßen erreichte hohe Homogenität ist weitere Voraussetzung für das Erreichen gleichbleibender Qualität der mit fermentiertem Rückteig herzustellenden Produkte.

Der fermentierte Rückteig weist bevorzugt einen pH-Wert von kleiner pH 4, bevorzugt 3,6 bis 3,9 besonders bevorzugt 3,7 bis 3,8 auf.

Der fermentierte Rückteig wird bevorzugt auf >0 °C und ≤ 14 °C, besonders bevorzugt auf >0 °C und ≤ 8 °C gekühlt. Grundsätzlich ist auch eine Kühlung unter 0 °C, insbesondere auf ≥-24 °C möglich, was aber durch den Einfrierprozess mit höheren Energiekosten verbunden wäre.

Insbesondere wird der fermentierte Rückteig bei >0 °C und ≤14 °C bis zu 48 h gekühlt.

Der fermentierte Rückteig wird bevorzugt bei >0 °C und ≤ 8 °C bis zu 72 h gekühlt. Die Haltbarkeit beträgt bis zu 48 Stunden bei zusätzlicher Kühlung auf >0 °C und kleiner gleich 14 °C und bis zu 72 Stunden bei Kühlung auf >0 °C und kleiner gleich 8 °C. Gemäß dem erfindungsgemäßen Verfahren müssen Rückteige nicht unmittelbar verarbeitet werden. Sie können bei ihrem Entstehen gesammelt werden, beispielsweise bis zu 60 Minuten, und gemeinsam zu einem Fermentierten Rückteig verarbeitet werden. Der Fermentierte Rückteig ist vergleichbarer/reproduzierbarer in seinen Eigenschaften als frischer Rückteig, da die Erfindung die Rückteig-Bestandteile durch die Fermentation verquillt und gleichwertig aufschließt.

In einer Ausführungsform werden 20 bis 60 Teile Rückteig aus Schritt b), insbesondere 35 bis 58 Teile Rückteig aus Schritt b), mit 5 bis 40 Teilen Wasser, insbesondere 17 bis 25 Teilen Wasser, und 25 bis 50 Teilen Anstellgut vermischt.

Die Fermentation erfolgt bevorzugt bei einer Temperatur von 26 °C bis 35 °C.

Die Fermentation erfolgt bevorzugt über eine Zeitspanne von 6 h bis 16 h (Stunden).

Das Vermischen in Schritt e), insbesondere Kneten, erfolgt insbesondere über einen Zeitraum von 5 min bis 50 min, insbesondere 20 min bis 40 min.

Die Starterkultur enthält insbesondere Hefen und Milchsäurebakterien, insbesondere Lactobacillus-Arten wie Lactobacillus brevis, L. acidophilus, L. delbrueckii, L. fermentum, L. gallinarum, L. helveticus, L. paracasei, L. plantarum, L. sanfranciscensis, L. ultunensis und Leuconostoc mesenteroides) und Hefen (Saccharomyces cerevisiae, Candida var. und/oder Hansenula var.), insbesondere zwei oder drei sich ergänzende Lactobacillus-Arten. Wichtiges Kriterium einer für das Verfahren geeigneten und nutzbaren Kultur ist die Duchsetzungsstärke der Lactobacillen oder Lactobacillen Mischungen gegenüber der Rückteig-Mikroflora und resultierender guter Säurebildung/pH-Absenkung.
Insbesondere bevorzugt sind Starterkulturen, die Lactobacillus paracasei BSB 2 DSM 28 104, Lactobacillus gallinarum BSB 1 DSM 28103 oder Mischungen davon enthalten. Diese Starterkultur ist Gegenstand der internationalen Anmeldung WO 2015/097216 auf deren Offenbarungsgehalt ausdrücklich Bezug genommen wird. Kulturen von Lactobacillus paracasei BSB 2 DSM 28 104 und Lactobacillus gallinarum BSB 1 DSM 28103 wurden am 198. 12. 2014 bei der Sammlung Leibniz Institut DSMZ-Deutsche Sammlung von Mikroorganismen und Zellkulturen GmbH, Inhoffenstr. 7B, D-38124 Braunschweig, Deutschland, unter den Bedingungen des Budapester Vertrages hinterlegt.

Gegenstand der Erfindung ist des Weiteren ein Basisteig der nach dem erfindungsgemäßen Verfahren erhältlich ist.

Ebenfalls Gegenstand der vorliegenden Erfindung ist die Verwendung des erfindungsgemäßen Basisteigs zur Herstellung von Backprodukten, insbesondere Brot, darunter bevorzugt Weizen- und Weizenmischbrot, Dinkelbrot, Mehrkorn- und Spezialbroten, auch mit Roggenanteil, sowie Brötchen und Mehrkornbrötchen, Laugengebäcken und anderen Kleingebäcken sowie fetthaltigen Teigen und Feinbackwaren, zum Beispiel Laugenbrezeln und -brötchen, Pizzateigen, Croissants und Plundergebäcken.

Die Erfindung wird im Folgenden anhand der nicht beschränkenden Beispiele erläutert.

### Beispiel 1 (erfindungsgemäß)

Herstellung eines Basisteigs (Rückteig als Feinteig mit 55 Teilen Butter bezogen auf die Getreidebestandteile, Definition gemäß Bundesministerium für Ernährung und Landwirtschaft (Hrsg.): Leitsätze für Feine Backwaren. Stand 04.02.2010. Anhand der Beispielrezeptur entspricht dies 24 Gew.%.

### a. Herstellung des Anstellguts (in einem isolierten Behältnis, z.B. einem IsoFermenter der Fa. IsernHäger):

Es wurden 20 kg temperiertes Wasser und 10 kg Weizenmehl (Type 550) vermischt. (alternativ jede Mischung von Wasser und Mehl, die diesem Verhältnis entspricht) Die Soll-Temperatur nach dem Vermischen betrug etwa 32 °C. Anschließend wurde 0,5 kg Starterkultur (Starter Weizensauerteig (Produktname "Weizen StartGut®-Bio San Francisco" der Fa. IsernHäger)), die handelsüblich mit Backschrot eingedickt und lagerfähig gemacht worden ist, und im Folgenden als Starter Weizensauerteig bezeichnet wird, aus der Kühlung genommen und in einer Schale zerkrümelt. Die Starterkultur wurde unter das temperierte Wasser/Mehl Gemisch gegeben. Die anschließende Reifezeit betrug 24 Stunden. Das erhaltene Anstellgut, ist ohne Kühlung bis zu 12 Stunden für die Herstellung der folgenden Rückteig-Stufe verwendbar.

### b. Herstellung der Rückteig-Stufe (in einer Anlage W100K der Fa. IsernHäger) zum Erhalt des Fermentierten Rückteigs:

Eine Grundrezeptur für Weizenfeinteig wurde gemäß Tabelle 1 ausgewogen, vermischt und geknetet. Auf einer handelsüblichen Ausrollanlage wurden gemäß der handwerklichen Lehre in zwei doppelten Touren mit 25 Teilen Butter zu einem tourierten Feinteig verarbeitet. Der Feinteig wurde auf eine Teigstärke zwischen 3 und 8 mm ausgerollt. Der Feinteig wurde auf 10x12 cm große Stücke vorzerkleinert. Der entsprechend vorzerkleinerte Feinteig, (entspricht dem Rückteig), wurde nachfolgend einer Fermentation unterzogen. Bezogen auf eine Gesamtmenge von 100 kg, die hier passend zu den vorgenannten Angaben für das Anstellgut herangezogen wird (aber auch jede andere Gesamtmenge, die in der Praxis vorkommt, da sie sich aus den Ansatzmengen ergibt, die in Fermentern verarbeitet werden können), ergaben sich für das Anwendungsbeispiel folgende Einwaagen:
Zunächst 17 kg (= 17 Teile) temperiertes Wasser, danach 58 kg (Teile) des Rückteigs in einen Fermenter mit Rührwerk geben, anschießend 15 Minuten mit dem Rührwerk vermischen und zerkleinern; zuletzt 25 kg (Teile) Anstellgut zugeben und alle Komponenten innerhalb weiterer 15 Minuten Rührzeit innig vermischen. Die Soll-Temperatur nach dem Vermischen betrug 27 - 28 °C. Anschließend 930 Minuten unter Intervall-Rühren fermentieren lassen. Typischerweise tritt während der Fermentation eine Eigenerwärmung auf. Die Kühleinrichtung des Fermenters sorgt dafür, dass ein Temperaturniveau von 28 °C plus/minus 2 °C eingehalten wurde. Am Ende dieses Prozesses kann das Fermentationsprodukt, im Folgenden als "Fermentierter Rückteig" bezeichnet, zeitversetzt oder sofort verwendet werden.

Der nachfolgend für den Herstellprozess zubereitete Hauptteig entsprach der Grundrezeptur, jedoch in all ihren Bestandteilen vermindert um die Anteile, die ihr über den Rückteig wieder zugeführt wurden. Die Summe aus einwaagereduzierter Grundrezeptur und dem Rückteig bildete den Hauptteig, der in der Summe der Einzelbestandtele wieder dem Grundteig entsprach. Nachfolgende Berechnung für einen Weizenfeinteig sieht vor, dass 15 Teile der Gesamtmehlmenge von 100 Teilen durch den Anteil Fermentierten Rückteigs ersetzt wurden, der neben den anderen Zutaten 15 Teile Weizenmehl enthielt. Die 15 Teile setzten sich entsprechendend der zuvor beschriebenen Herstellungsanweisung zu 11,3 Teilen aus dem Mehl des Rückteigs und zu 3,7 Teilen aus dem Mehl des Anstellguts der 1. Stufe zusammen.

### Beispiel 2 (Vergleichsbeispiel)

Ein Grundteig mit Einwaagen gemäß Tabelle 1 wurde analog Beispiel 1 hergestellt.

**Tabelle 1: Zusammensetzung und Einsparung bei Verwendung des fermentierten Rückteigs**

| Rohstoffe | Grundrezept [kg] | Beispiel 2 (Vergleich) [kg] | Beispiel 1 (Erfindungsgemäß) [kg] |
|---|---|---|---|
| Weizenmehl Typ 550 | 100 | 100 | 85 |
| Fett | 10 | 10 | 3,74 |
| Salz | 1,8 | 1,8 | 1,6 |
| Enzymreiches Backmittel | 3 | 3 | 2,66 |
| Zucker | 3,5 | 3,5 | 3,1 |
| Hefe | 5 | 5 | 4,43 |
| Fermentierter Rückteig | - | - | 44,27 |
| Wasser | 58 | 58 | 36,50 |
| Summe | 181,3 | 181,3 | 181,3 |
| Ersparnis | - | - | 44,27 |
| | | | |
| Tourierfett | 45,33 | 45,33 | 45,33 |
| Gesamtsumme | 226,63 | 226,63 | 226,63 |

### Ergebnis

Mit Hilfe des erfindungsgemäßen Rückteiges lassen sich in Beispiel 1 (erfindungsgemäß) ohne Qualitätsverluste und reproduzierbar 44,27 kg, d.h. 24,4 Gew. % des Grundrezepts wiederverwenden und somit im Vergleich zu Beispiel 2 (Vergleichsbeispiel) einsparen.

## Patentansprüche

1. Verfahren zur Herstellung eines Basisteigs für Backprodukte unter Einsatz von fermentierten Rückteig, umfassend die folgenden Schritte:
a) Versetzen eines Sauerteigsubstrates mit einer Starterkultur und Erhalten eines Anstellguts,
b) Zerkleinerung und/oder Vereinzelung eines Rückteiges,
c) Vermischung von 20 bis 70 Teilen Rückteigs aus Schritt b) mit 5 bis 40 Teilen Wasser und 15 bis 50 Teilen des Anstellgutes aus Schritt a) und erhalten einer Mischung,
d) Fermentierung, gegebenenfalls Homogenisierung, der Mischung bei einer Temperatur von 20 bis 38 °C über die Zeitspanne von 6 - 20 h (Stunden) und Erhalten eines fermentierten Rückteigs mit einem pH-Wert von kleiner pH 4,5;
e) Vermischung von 15 bis 35 Teilen des fermentierten Rückteigs mit 65 bis 85 Teilen eines Rohteiges und erhalten eines Basisteiges.

2. Verfahren nach Anspruch 1, wobei das Sauerteigsubstrat einen tourierten Feinteig, insbesondere einen tourierten Weizenfeinteig oder Dinkelfeinteig enthält.

3. Verfahren nach Anspruch 1 oder 2, wobei Sauerteigsubstrat Feinteig, insbesondere Plunderteige, bis zu 24 Gew. % Fettanteil enthält.

4. Verfahren nach einem der Ansprüche 1 bis 3, wobei der fermentierte Rückteig einen pH-Wert von kleiner pH 4, insbesondere 3,6 bis 3,9 weiterhin insbesondere 3,7 bis 3,8 aufweist.

5. Verfahren nach einem der Ansprüche 1 bis 4, wobei der fermentierte Rückteig auf >0 °C und ≤ 14 °C, insbesondere >0 °C und ≤ 8 °C gekühlt wird.

6. Verfahren nach Anspruch 5, wobei der fermentierte Rückteig bei >0 °C und ≤14 °C bis zu 48 h gekühlt wird.

7. Verfahren nach Anspruch 5, wobei der fermentierte Rückteig bei >0 °C und ≤ 8 °C bis zu 72 h gekühlt wird.

8. Verfahren nach einem der Ansprüche 1 bis 7, wobei 20 bis 60 Teile Rückteig aus Schritt b), insbesondere 35 bis 58 Teile Rückteig aus Schritt b), mit 5 bis 40 Teilen Wasser , insbesondere mit 17 bis 25 Teilen Wasser, und 25 bis 50 Teilen Anstellgut vermischt werden.

9. Verfahren nach einem der Ansprüche 1 bis 8, wobei die Fermentation bei einer Temperatur von 26 °C bis 35 °C erfolgt.

10. Verfahren nach einem der Ansprüche 1 bis 9, wobei die Fermentation über eine Zeitspanne von 6 h bis 16 h erfolgt.

11. Verfahren nach einem der Ansprüche 1 bis 10, wobei das Vermischen in Schritt e), insbesondere Kneten, über einen Zeitraum von 5 min bis 50 min, insbesondere 10 min bis 20 min erfolgt.

12. Verfahren nach einem der Ansprüche 1 bis 11, wobei die Starterkultur Hefen und Milchsäurebakterien, insbesondere Lactobacillus-Arten wie Lactobacillus brevis, L. acidophilus, L. delbrueckii, L. fermentum, L. gallinarum, L. helveticus, L. paracasei, L. plantarum, L. sanfranciscensis, L. ultunensis und Leuconostoc mesenteroides) und Hefen (Saccharomyces cerevisiae, Candida var. und/oder Hansenula var.), insbesondere zwei oder drei sich ergänzende Lactobacillus-Arten enthält.

13. Verfahren nach mindestens einem der Ansprüche 1 bis 12, wobei die Starterkultur Lactobacillus paracasei BSB 2 DSM 28 104 oder Lactobacillus gallinarum BSB 1 DSM 28103 ist oder Mischungen davon enthält.

14. Basisteig erhältlich nach einem der Ansprüche 1 bis 13.

15. Verwendung eines Basisteigs nach Anspruch 14 zur Herstellung von Backprodukten, insbesondere Brot darunter bevorzugt Weizen- und Weizenmischbrot, Dinkelbrot, Mehrkorn- und Spezialbroten, auch mit Roggenanteil, sowie Brötchen und Mehrkornbrötchen, Laugengebäcken und anderen Kleingebäcken sowie fetthaltigen Teigen und Feinbackwaren, weiterhin insbesondere Laugenbrezeln und -brötchen, Pizzateigen, Croissants und Plundergebäcken.

## Claims

1. A method for manufacturing a basic dough for baked products by using fermented residual dough, comprising the following steps:
a) inoculating a sour dough substrate with a starter culture and obtaining a starting material,
b) comminution and/or separation of a residual dough,
c) mixing 20 to 70 parts of residual dough from step b) with 5 to 40 parts of water and 15 to 50 parts of the starting material from step a) and obtaining a mixture,
d) fermenting, possibly homogenizing, the mixture at a temperature of 20 to 38 °C over the time interval of 6 - 20 h (hours) and obtaining a fermented residual dough having a pH value of less than pH 4.5;
e) mixing 15 to 35 parts of the fermented residual dough with 65 to 85 parts of a raw dough and obtaining a basic dough.

2. The method according to claim 1, wherein said sour dough substrate comprises a folded fine dough, especially a folded wheat fine dough or spelt fine dough.

3. The method according to claim 1 or 2, wherein said sour dough substrate comprises a fine dough, especially Danish pastry dough, with a fat content of up to 24% by weight.

4. The method according to any of claims 1 to 3, wherein said fermented residual dough has a pH value of lower than pH 4, especially from 3.6 to 3.9, more especially from 3.7 to 3.8.

5. The method according to any of claims 1 to 4, wherein said fermented residual dough is cooled down to > 0 °C and ≤ 14 °C, especially > 0 °C and ≤ 8 °C.

6. The method according to claim 5, wherein said fermented residual dough is cooled at > 0 °C and ≤ 14 °C for up to 48 h.

7. The method according to claim 5, wherein said fermented residual dough is cooled at > 0 °C and ≤ 8 °C for up to 72 h.

8. The method according to any of claims 1 to 7, wherein 20 to 60 parts of residual dough from step b), especially 35 to 58 parts of residual dough from step b), is mixed with 5 to 40 parts of water, especially with 17 to 25 parts of water, and 25 to 50 parts of the starting material.

9. The method according to any of claims 1 to 8, wherein said fermentation is effected at a temperature of from 26 °C to 35 °C.

10. The method according to any of claims 1 to 9, wherein said fermentation is effected over a period of from 6 h to 16 h.

11. The method according to any of claims 1 to 10, wherein said mixing in step e), especially kneading, is effected over a period of from 5 min to 50 min, especially from 10 min to 20 min.

12. The method according to any of claims 1 to 11, wherein said starter culture comprises yeasts and lactic acid bacteria, especially *Lactobacillus* species, such as *Lactobacillus brevis, L. acidophilus, L. delbruecki, L. fermentum, L. gallinarum, L. helveticus, L. paracasei, L. plantarum, L. sanfranciscensis, L. ultunensis,* and *Leuconostoc mesenteroides* and yeasts *(Saccharomyces cerevisiae, Candida* var. and/or *Hansenula* var.), especially two or three mutually supplementing Lactobacillus species.

13. The method according to at least one of claims 1 to 12, wherein said starter culture comprises *Lactobacillus paracasei* BSB 2 DSM 28104, or *Lactobacillus gallinarum* BSB 1 DSM 28103, or mixtures thereof.

14. A basic dough obtainable according to any of claims 1 to 13.

15. Use of a basic dough according to claim 14 for manufacturing baked products, especially bread, preferably wheat bread and mixed wheat bread, spelt bread, multigrain and special breads, also with a rye proportion, as well as rolls and multigrain rolls, lye rolls, and other small baked products, as well as fat-containing doughs and fine baked products, more especially pretzels and pretzel rolls, pizza doughs, croissants, and Danish pastry products.

## Revendications

1. Procédé de production d'une pâte de base pour produits de boulangerie à l'aide une pâte de retour, le procédé comprenant les étapes suivantes :
a) placer un substrat de levain avec une culture de départ et obtenir un produit de levage,
b) fragmenter et/ou séparer une pâte de retour,
c) mélanger de 20 à 70 parties de pâte de retour de l'étape b) avec 5 à 40 parties d'eau et 15 à 50 parties du produit de levage de l'étape a) et obtenir un mélange,
d) laisser fermenter, éventuellement homogénéiser le mélange à une température de 20 à 38 °C sur la période de 6 à 20 h (heures), et obtenir une pâte de retour fermentée ayant un pH inférieur à 4,5 ;
e) mélanger de 15 à 35 parties de la pâte d retour fermentée avec 65 à 85 parties d'une pâte brute et obtenir une pâte de base.

2. Procédé selon la revendication 1, dans lequel le substrat de levain comprend du levain fin, en particulier du levain fin de froment ou d'épeautre touré.

3. Procédé selon la revendication 1 ou 2, dans lequel le substrat de levain contient du levain, en particulier de la pâte feuilletée, jusqu'à 24 % en poids de matières grasses contient.

4. Procédé selon l'une des revendications 1 à 3, dans lequel la pâte de retour fermentée a un pH inférieur à 4, en particulier de 3,6 à 3,9, plus particulièrement de 3,7 à 3,8.

5. Procédé selon l'une des revendications 1 à 4, la pâte de retour fermentée est refroidi à une température comprise entre >0 °C et ≤ 14 °C, en particulier >0 °C et <8 °C.

6. Procédé selon la revendication 5, dans lequel la pâte de retour fermentée est refroidie à une température comprise entre >0 °C et ≤ 14 °C jusqu'à 48 h.

7. Procédé selon la revendication 5, dans lequel la pâte de retour fermentée est refroidie une température comprise entre >0 °C et ≤8 °C jusqu'à 72 heures.

8. Procédé selon l'une des revendications 1 à 7, dans lequel 20 à 60 parties de pâte de retour de l'étape b), en particulier 35 à 58 parties de pâte de retour de l'étape b), sont mélangées avec 5 à 40 parties d'eau, en particulier avec 17 à 25 parties d'eau, et 25 à 50 parties de pâte de levage.

9. Procédé selon l'une quelconque des revendications 1 à 8, dans lequel la fermentation est effectuée à une température de 26 °C à 35 °C.

10. Procédé selon l'une des revendications 1 à 9, dans lequel la fermentation est effectuée sur une durée de 6 h à 16 h.

11. Procédé selon l'une des revendications 1 à 10, dans lequel le mélange à étape e), en particulier le pétrissage, est effectué sur une durée de 5 min à 50 min, en particulier de 10 min à 20 min.

12. Procédé selon l'une des revendications 1 à 11, dans lequel la culture de départ contient de la levure et des bactéries de l'acide lactique, en particulier les espèces Lactobacillus, comme Lactobacillus brevis, L. acidophilus, L delbrueckii, L. fermentum, L. gallinarum, L. helveticus, L. paracasei, L plantarum, L. sanfranciscensis, L. ultunensis et Leuconostoc mesenteroides) et la levure (Saccharomyces cerevisiae, Candida var. et/ou Hansenula var.), en particulier deux ou trois de espèces de Lactobacillus qui se complètent.

13. Procédé selon l'une des revendications 1 à 12, dans lequel la culture de départ contient Lactobacillus paracasei BSB 2 DSM 28 104 ou Lactobacillus gallinarum BSB 1 DSM 28103 ou leurs mélanges.

14. Pâte de base pouvant être obtenue selon l'une des revendications 1 à 13.

15. Utilisation d'un pâte de base selon la revendication 14 pour produire des produits de boulangerie, en particulier du pain y compris de préférence du pain de blé et de mélange de blés, du pain d'épeautre, des pains multi-céréales et des pains spéciaux, également avec une proportion de seigle, ainsi que des petits pains et petits pains multi-céréales, des produits de boulangerie salés et d'autres petits produits de boulangerie, ainsi que des pâtes contenant des matière grasse et des pâtisseries, plus particulièrement des bretzels et des petits pains salés, des pates à pizza, des croissants et des pâtisseries feuilletées.
